(19) Europäisches Patentamt
European Patent Office
Office européen des brevets

(11) **EP 2 879 842 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(21) Anmeldenummer: **13745353.6**

(22) Anmeldetag: **01.08.2013**

(51) Int Cl.:
*B25J 9/16* (2006.01)     *G05B 19/425* (2006.01)

(86) Internationale Anmeldenummer:
**PCT/EP2013/002320**

(87) Internationale Veröffentlichungsnummer:
**WO 2014/019706 (06.02.2014 Gazette 2014/06)**

(54) **VERFAHREN UND PROGRAMMIERMITTEL ZUR MODIFIKATION EINER ROBOTERBAHN**

METHOD AND PROGRAMMING MEANS FOR MODIFICATION OF A ROBOT PATH

PROCÉDÉ ET MOYEN DE PROGRAMMATION PERMETTANT DE MODIFIER UNE TRAJECTOIRE DE ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2012 DE 102012015437**

(43) Veröffentlichungstag der Anmeldung:
**10.06.2015 Patentblatt 2015/24**

(73) Patentinhaber: **KUKA Deutschland GmbH**
**86165 Augsburg (DE)**

(72) Erfinder:
• **HAGENAUER, Andreas**
**86316 Friedberg (DE)**
• **DANGEL, Catherine**
**86500 Kutzenhausen (DE)**
• **HANKE, Elisabeth**
**86169 Augsburg (DE)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
**EP-A2- 1 465 028     EP-A2- 1 531 028**
**DE-A1- 10 161 470     US-A1- 2006 178 778**

EP 2 879 842 B1

## Beschreibung

Die vorliegende Erfindung betrifft ein Verfahren und ein Programmiermittel zur Modifikation einer Roboterbahn.

Roboterbahnen weisen in der Regel eine Mehrzahl von Bahnpunkten auf. Diese können insbesondere manuell geteacht, d.h. mit dem Roboter manuell angefahren und abgespeichert, oder auch automatisiert generiert werden, beispielsweise aus CAD-Daten eines robotergestützt zu bearbeitenden Werkstückes oder dergleichen.

Es kann erforderlich werden, solche Roboterbahnen zu modifizieren. Beispielsweise kann ein neues Hindernis im Arbeitsraum des Roboters, etwa ein zusätzliches Regal, ein Umfahren des Hindernisses während eines Transports eines Werkstückes durch den Roboter erfordern. Gleichermaßen können sich die zu bearbeitenden Werkstücke und/oder Prozessbahnen durch Revisionen der zugeordneten Produkte, insbesondere lokal, ändern.

Bisher müssen hierzu nach betriebsinterner Praxis die einzelnen Bahnpunkte der vorgegebenen Roboterbahn einzeln sequentiell modifiziert werden, beispielsweise, indem sie durch neu geteachte Punkte ersetzt werden. Eine solche sequentielle Modifikation einzelner Bahnpunkte ist nicht nur aufwändig und fehleranfällig, sondern führt häufig zu einer ungewollten Veränderung der restlichen Roboterbahn in der Umgebung des jeweils gerade modifizierten Bahnpunktes. Daher erfordern solche Modifikationen heute regelmäßig eine hohe Erfahrung der Anwender.

Die EP 1 531 028 A2 betrifft eine Vorrichtung zur Modifikation eines Roboterprogrammes. Dabei werden aufeinanderfolgende geteachte Punkte markiert.

Ein Bediener modifiziert einen mittleren dieser Punkte. Daraus wird ein Modifikationsvektor berechnet. Die anderen markierten Punkte werden mithilfe dieses Modifikationsvektors modifiziert, der dabei entsprechend ihres Abstands zum näheren Endpunkt skaliert wird.

Aufgabe der vorliegenden Erfindung ist es, ein Modifizieren einer vorgegebenen Roboterbahn zu verbessern.

Diese Aufgabe wird durch ein Verfahren mit den Merkmalen des Anspruchs 1 gelöst. Anspruch 10 stellt ein Programmiermittel, das zum Durchführen eines solchen Verfahrens eingerichtet ist, unter Schutz. Ein Programmiermittel im Sinne der vorliegenden Erfindung kann hard- und/oder softwaretechnisch ausgebildet sein. Es kann insbesondere ein Programm, Programmmodul und/oder eine Programmierumgebung, das bzw. die ein erfindungsgemäßes Verfahren ausführt oder zu dessen Ausführung eingerichtet ist, wenn es bzw. sie in einem Computer abläuft bzw. installiert ist, einen Datenträger bzw. Speichermedium mit einem solchen Programm, Programmmodul bzw. einer solchen Programmierumgebung, und/oder einen Computer mit einem Speicher, einer Verarbeitungseinheit und einer Ein-/Ausgabeeinheit aufweisen, insbesondere sein, der zur Ausführung eines erfindungsgemäßen Verfahrens eingerichtet ist. Die Unteransprüche betreffen vorteilhafte Weiterbildungen.

Die vorliegende Erfindung definiert zur Modifikation einer Roboterbahn, die mehrere vorgegebene Bahnpunkte aufweist, ein Vorgeben eines Modifikationsbereichs, der zwei oder mehr Bahnpunkte der Roboterbahn aufweist, ein Vorgeben einer Modifikation eines Referenzpunktes des Modifikationsbereichs, und ein automatisiertes Modifizieren des Modifikationsbereichs, insbesondere von Bahnpunkten des Modifikationsbereichs, auf Basis der vorgegebenen Modifikation, vorgesehen.

Hierdurch muss der Bediener nur noch einen Referenzpunkt modifizieren, um einen Modifikationsbereich mit mehreren Bahnpunkten zu modifizieren, anstatt wie bisher die Bahnpunkte einzeln zu modifizieren. Zudem kann durch das automatisierte Modifizieren des Modifikationsbereichs auf Basis der vorgegebenen Modifikation des Referenzpunktes die Modifikation des Modifikationsbereichs verbessert werden. Beispielsweise kann in einer Ausführung eine Rückwirkung einer Modifikation eines Bahnpunktes auf einen benachbarten Bahnpunkt verhindert werden, wie sie bei der bisher angewandten sequentiellen Modifikation einzelner Bahnpunkte auftreten kann. Vereinfacht gesagt kann der Anwender einen Referenzpunkt beispielsweise verschieben und hierdurch eine entsprechende Verschiebung weiterer Bahnpunkte des Modifikationsbereichs bewirken.

Vorgegebene, insbesondere geteachte Bahnpunkte, werden unter Umständen bei der Vorgabe einer Roboterbahn mehrfach verwendet. So kann beispielsweise derselbe Bahnpunkt als Anfangs- und Endpunkt einer Roboterbahn vorgegeben bzw. verwendet werden. Nach einer Ausführung soll bei einer Modifikation eines Modifikationsbereichs ein solcher mehrfach verwendeter Bahnpunkt einerseits in seiner Verwendung zur Vorgabe des Modifikationsbereichs modifiziert werden, andererseits in seiner Verwendung zur Vorgabe der Roboterbahn außerhalb des Modifikationsbereichs unverändert bleiben. Soll beispielsweise nur das Ende einer Roboterbahn modifiziert werden, deren Anfangs- und Endpunkt durch denselben geteachten Bahnpunkt vorgegeben sind, soll einerseits dieser Bahnpunkt in seiner Verwendung als Endpunkt modifiziert werden, um das Ende der Roboterbahn zu modifizieren, andererseits derselbe Bahnpunkt in seiner Verwendung als Anfangspunkt nicht modifiziert werden, um den Anfang der Roboterbahn unverändert zu lassen. Daher werden in einer Ausführung ein oder mehrere Bahnpunkte des Modifikationsbereichs dupliziert und das bzw. die Duplikate auf Basis der vorgegebenen Modifikation automatisiert modifiziert, wobei der Modifikationsbereich durch das bzw. die modifizierten Duplikate vorgegeben wird. Auf diese Weise kann der Modifikationsbereich - durch die Modifikation der ihn vorgebenden Duplikate - modifiziert werden, während andererseits die vorgegebenen Bahnpunkte selber und damit die durch sie vorgegebene übrige Roboterbahn unverändert bleiben.

Eine Roboterbahn im Sinne der vorliegenden Erfindung weist zwei oder mehr vorgegebene Bahnpunkte auf und kann insbesondere eine Wegvorschrift zwischen Bahnpunkten P1, P2,... umfassen, beispielsweise die Vorgabe einer Linear- oder Circularbewegung zwischen bzw. durch Bahnpunkte. In einer Ausführung ist die Roboterbahn, insbesondere ein oder mehrere Abschnitte der Roboterbahn, durch eine Spline-Funktion vorgegeben, insbesondere eine Spline-Funktion dritten oder fünften Grades oder eine B-Spline-Funktion. Ein Bahnpunkt kann insbesondere auf der vorgegebenen Roboterbahn liegen. Gleichermaßen kann die Roboterbahn auch Bahnpunkte aufweisen und durch diese vorgegeben sein, die nicht direkt auf ihr liegen, sondern überschliffen werden.

Ein Bahnpunkt im Sinne der vorliegenden Erfindung kann ein oder mehrere Koordinaten umfassen, die eine Pose des Roboters, wenigstens teilweise, definieren. Insbesondere kann ein Bahnpunkt im Arbeitsraum des Roboters eine Lage und/oder Orientierung eines roboterfesten Referenzsystems, insbesondere des TCPs, beschreiben. Beispielsweise kann ein Bahnpunkt aus drei, insbesondere kartesische, Zylinder- oder Polarkoordinaten, die die Lage des TCPs beschreiben, bestehen, so dass Bahnpunkte und entsprechend die durch sie vorgegebene Roboterbahn dreidimensional sind. Zusätzlich oder alternativ kann ein Bahnpunkt drei Koordinaten, insbesondere EULER- oder KARDAN-Winkel, die die Orientierung des TCPs beschreiben, aufweisen, so dass Bahnpunkte und entsprechend die durch sie vorgegebene Roboterbahn drei- bzw. sechsdimensional sind. Gleichermaßen kann ein Bahnpunkt im Koordinatenraum des Roboters die Stellung einer oder mehrerer Achsen bzw. Gelenke des Roboters beschreiben, insbesondere die Drehstellungen bzw. -lagen von Drehgelenken und/oder die Stellwege von Linearachsen. Beispielsweise können Bahnpunkte und entsprechend die durch sie vorgegebene Roboterbahn für einen sechsachsigen Roboter dessen sechs Achsstellungen beschreiben und somit wiederum sechsdimensional sein.

Ein Modifikationsbereich kann in einer Ausführung dadurch vorgegeben werden, dass ein Bahnpunkt der Roboterbahn als Anfangs- und ein weiterer Bahnpunkt der Roboterbahn als Endpunkt des Modifikationsbereichs vorgegeben, insbesondere ausgewählt werden. Gleichermaßen kann eine Strecke bzw. Länge der Roboterbahn vorgegeben werden, um die ein Anfangs- und/oder Endpunkt des Modifikationsbereichs in Durchlaufrichtung vor oder hinter einem vorgegebenen, insbesondere ausgewählten Bahnpunkt der Roboterbahn liegt. Beispielsweise kann ein Bahnpunkt innerhalb des vorzugebenden Modifikationsbereichs ausgewählt und durch eine erste Strecke ein Anfangspunkt des Modifikationsbereichs, der um diese Strecke vor dem ausgewählten Bahnpunkt auf der Roboterbahn liegt, und durch eine zweite Strecke ein Endpunkt des Modifikationsbereichs vorgegeben werden, der um diese Strecke hinter dem ausgewählten Bahnpunkt auf der Roboterbahn liegt. Gleichermaßen können auch zwei Bahnpunkte der Roboterbahn ausgewählt und durch eine erste und zweite Strecke vorgegeben werden, in welchem Abstand zu dem einen Bahnpunkt der Anfangspunkt und in welchem Abstand zu dem anderen Bahnpunkt der Endpunkt des Modifikationsbereichs liegt. Eine vorgegebene Strecke kann eine reelle Zahl, insbesondere auch gleich Null, negativ und/oder gebrochenrational sein. Ein Modifikationsbereich kann somit insbesondere der gesamten Roboterbahn oder einer echten Teilmenge bzw. einem echten Teilabschnitt dieser entsprechen.

In einer Ausführung der vorliegenden Erfindung kann, insbesondere durch Auswahl eines Bahnpunktes der Roboterbahn und Vorgabe einer ersten und zweiten Strecke zum Anfangs- bzw. Endpunkt des Modifikationsbereichs, die kleiner sind als der Abstand der zu diesem Bahnpunkt benachbarten Bahnpunkte, zusätzlich auch ein Modifikationsbereich vorgegeben werden, der nur diesen vorgegebenen Bahnpunkt der Roboterbahn aufweist. Auf diese Weise kann die bisherige Funktionalität, auch einzelne Bahnpunkte modifizieren zu können, integriert werden. Insoweit wird vorliegend unter einem Vorgeben eines Modifikationsbereichs, der zwei oder mehr Bahnpunkte der Roboterbahn aufweist, insbesondere verstanden, dass das Verfahren bzw. Programmiermittel die Möglichkeit aufweist, (auch) solche Modifikationsbereiche mit zwei oder mehr Bahnpunkten vorzugeben, die dann gemeinsam modifiziert werden.

Vor, mit oder nach Vorgabe des Modifikationsbereichs wird eine Modifikation eines Referenzpunktes des Modifikationsbereichs vorgegeben. In einer Ausführung kann dies die Vorgabe, insbesondere Auswahl eines zu modifizierenden Bahnpunktes des Modifikationsbereichs umfassen, wobei der Referenzpunkt mit dem vorgegebenen zu modifizierenden Bahnpunkt identisch oder in einer vorgegebenen Lage zu diesem, insbesondere um eine vorgegebene Strecke vor oder hinter diesem auf der Roboterbahn angeordnet sein kann. Beispielsweise kann in einer Weiterbildung ein Modifikationsbereich durch zwei benachbarte Bahnpunkte der Roboterbahn als Anfangs- bzw. Endpunkt und die Mitte der Roboterbahn zwischen diesen Bahnpunkten als Referenzpunkt vorgegeben werden, so dass durch dessen Modifikation beide Bahnpunkte gleichermaßen modifiziert werden.

Vor, mit oder nach Vorgabe des Referenzpunktes kann in einer Ausführung die Modifikation dieses Referenzpunktes vorgegeben werden. Dies kann in einer Weiterbildung dadurch erfolgen, dass ein modifizierter Bahnpunkt vorgegeben wird, auf den der Referenzpunkt verschoben werden soll. Beispielsweise kann ein Anwender einen modifizierten Bahnpunkt, insbesondere mittels eines Teachens bzw. manuellen Anfahrens und Abspeicherns dieses modifizierten Bahnpunktes, vorgeben und vorgeben, dass der Referenzpunkt auf diesen geteachten bzw. modifizierten Bahnpunkt verschoben werden soll. Gleichermaßen kann eine Modifikationsoperation für den Referenzpunkt parametriert werden. Beispielsweise kann eine Richtung und/oder eine Strecke vorgegeben werden, um die der Referenzpunkt verschoben werden soll. In einer Weiterbildung werden dem Anwender mehrere Modifikationsoperationen zur Verfügung gestellt, aus denen er eine oder mehrere auswählen und vorzugsweise parametrieren kann, beispielsweise ein (parametrierbares) Verschieben auf oder parallel zu der Roboterbahn, senkrecht oder in einem vorgeb- bzw. parametrierbaren Winkel zu dieser, in einer vorgegebenen oder vorgeb- bzw. parametrierbaren Richtung im Arbeits- oder Koordinatenraum oder dergleichen.

Zusätzlich oder alternativ kann in einer Ausführung eine Modifikationsoperation für den Modifikationsbereich, insbesondere dessen Bahnpunkte, vorgegeben, insbesondere parametriert und/oder aus einer Menge von mehreren vorgegebenen Modifikationsoperationen ausgewählt werden. Eine Modifikationsoperation für den Modifikationsbereich im Sinne der vorliegenden Erfindung kann insbesondere die Modifikation des Modifikationsbereichs, insbesondere von dessen Bahnpunkten, auf Basis bzw. in Abhängigkeit von einer Modifikationsoperation des Referenzpunktes beschreiben.

So kann in einer Ausführung der Modifikationsbereich, insbesondere dessen Bahnpunkte, parallel zu einem Verändern des Referenzpunktes verändert werden. Unter einem Verändern wird vorliegend insbesondere ein Verschieben eines Punktes im Arbeits- bzw. Koordinatenraum verstanden, unter einem parallelen Verändern entsprechend insbesondere ein paralleles Verschieben. Bildlich gesprochen können so ein oder mehrere, insbesondere alle Bahnpunkte des Modifikationsbereichs zusammen mit dem Referenzpunkt bewegt, insbesondere verschoben werden. Insbesondere ein solches Verändern kann in einer Weiterbildung skalierbar sein, vorzugsweise parametrisiert bzw. durch Vorgabe eines oder mehrerer Parameter vorgebbar. Unter einer skalierbaren bzw. skalierten Veränderung wird vorliegend insbesondere eine Veränderung eines Bahnpunktes des Modifikationsbereichs in Abhängigkeit von einer Veränderung des Referenzpunktes und/oder des Abstandes zwischen dem Bahn- und dem Referenzpunkt verstanden. So kann beispielsweise eine Verschiebung der Bahnpunkte des Modifikationsbereichs linear oder nichtlinear von dem Abstand der Bahnpunkte zu dem Referenz- und/oder einem Anfangs- und/oder Endpunkt abhängen, insbesondere entsprechend einer Funktion, die in der Nähe eines Anfangs- und eines Endpunktes des Modifikationsbereichs verschwindet und in der Nähe des Referenzpunktes maximal wird. Auf diese Weise wird der Modifikationsbereich in der Nähe von Anfangs- und Endpunkt nicht bzw. wenig verändert, in der Nähe des Referenzpunktes maximal, beispielsweise in gleicher Weise wie der Referenzpunkt.

Zusätzlich oder alternativ kann eine Menge auswähl- und/oder parametrierbarer Modifikationsoperationen für den Modifikationsbereich, insbesondere dessen Bahnpunkte, ein Glätten des Modifikationsbereichs umfassen. Unter einem Glätten wird vorliegend insbesondere in fachüblicher Weise eine Verringerung maximaler Gradienten bzw. Richtungsänderungen des Modifikationsbereichs bzw. der Roboterbahn zwischen den vorgegebenen bzw. modifizierten Bahnpunkten, insbesondere also ein Dämpfen von Schwingungen der Roboterbahn zwischen den vorgegebenen bzw. modifizierten Bahnpunkten, verstanden. Ein solches Glätten kann beispielsweise durch eine Tiefpassfilterung einer FOURIER-Transformation des Modifikationsbereichs implementiert sein. Gleichermaßen kann die modifizierte Roboterbahn im Modifikationsbereich beispielsweise durch eine Spline- oder BEZIER-Kurve vorgegeben werden, die durch die modifizierten Bahnpunkte definiert ist, allgemein also die Modifikation einer Wegvorschrift zwischen Bahnpunkten des Modifikationsbereichs.

Vor, mit oder nach dem Vorgeben eines Modifikationsbereichs und einer Modifikation eines Referenzpunktes des Modifikationsbereichs wird der Modifikationsbereich auf Basis der vorgegebenen Modifikation automatisiert modifiziert. Hierunter wird vorliegend insbesondere verstanden, dass Bahnpunkte des Modifikationsbereichs und/oder Wegvorschriften zwischen Bahnpunkten des Modifikationsbereichs entsprechend der vorgegebenen Modifikation, insbesondere entsprechend einer ausgewählten und/oder parametrierten Modifikationsoperation modifiziert werden. Ist beispielsweise als Modifikationsoperation für den Modifikationsbereich ein Verschieben der Bahnpunkte des Modifikationsbereichs parallel zu einem Verschieben des Referenzpunktes und als Modifikationsoperation für den Referenzpunkt ein Verschieben senkrecht zur Roboterbahn vorgegeben, werden automatisch alle Bahnpunkte des Modifikationsbereichs parallel zu der Verschiebung des Referenzpunktes senkrecht zur Roboterbahn verschoben.

Nach einer Ausführung bleibt ein Bereich der Roboterbahn, der an den Modifikationsbereich angrenzt, bei dem Modifizieren des Modifikationsbereichs, wenigstens im Wesentlichen, unverändert. Dies kann insbesondere dadurch erreicht werden, dass eine Modifikation am Rand des Modifikationsbereichs, beispielsweise durch eine entsprechende Skalierung, die mit einem Abstand zu einem Rand bzw. Anfangs- bzw. Endpunkt des Modifikationsbereichs gewichtet sein kann, gegen Null geht bzw. verschwindet, so dass die an den Modifikationsbereich angrenzende Roboterbahn unverändert in diesen unveränderten Rand des Modifikationsbereichs übergeht. Zusätzlich oder alternativ kann, beispielsweise durch Vorgabe entsprechender Randbedingungen, einem "Einfrieren" der an den Modifikationsbereich angrenzenden Bereiche der Roboterbahn oder dergleichen, eine Änderung dieser Bereiche unterdrückt werden.

Nach einer Ausführung erfolgt das Vorgeben des Modifikationsbereichs und/oder der Modifikation und/oder das Modifizieren des Modifikationsbereichs interaktiv. Hierunter wird insbesondere verstanden, dass dem Anwender ein Resultat einer entsprechenden Vorgabe ausgegeben, insbesondere visuell angezeigt wird. Beispielsweise kann nach Vorgabe des Modifikationsbereichs, Referenzpunktes und einer Modifikationsoperation für den Modifikationsbereich eine Veränderung bzw. Modifikation des Modifikationsbereichs entsprechend einer Veränderung des Referenzpunktes, beispielsweise einer Verschiebung mittels einer Eingabe, etwa einem Ziehen einer visuellen Darstellung des Referenzpunktes mit einer Maus oder dergleichen, angezeigt werden, so dass der Anwender eine Rückmeldung bzw. Information darüber erhält, wie sich die von ihm vorgegebene Modifikation auswirkt.

Weitere Vorteile und Merkmale ergeben sich aus den Unteransprüchen und den Ausführungsbeispielen. Hierzu zeigt, teilweise schematisiert:

Fig. 1:  eine mittels eines Verfahrens nach Fig. 2 modifizierte Roboterbahn; und

Fig. 2:  ein Verfahren zur Modifikation einer Roboterbahn nach einer Ausführung der vorliegenden Erfindung.

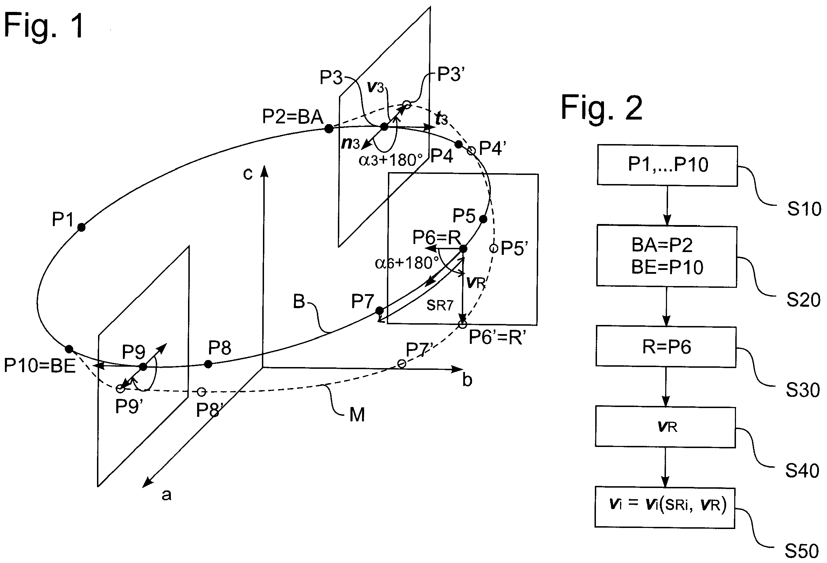

Fig. 1 zeigt eine Roboterbahn B, die durch die 10 vorgegebenen, beispielsweise geteachten, Punkte P1,...,P10 vorgegeben worden ist (vgl. Fig. 2: Schritt S10). Die Punkte können beispielsweise kartesische Punkte im Arbeitsraum darstellen und die Lage des TCPs eines Roboters beschreiben. In diesem Falle können die drei dargestellten Koordinatenachsen a, b, c als drei Raumrichtungen des Arbeitsraums gedacht werden. Gleichermaßen können die Punkte auch die Orientierung oder Lage und Orientierung des TCPs im Arbeitsraum oder die Gelenkstellungen des Roboters im Koordinatenraum darstellen. Diese können insbesondere sechsdimensional sein, wobei zur Verdeutlichung und kompakteren Darstellung nur drei Dimensionen a, b, c gezeigt sind.

Durch die Punkte ist mittels einer Wegvorschrift, beispielsweise durch eine Spline-Funktion, eine Roboterbahn vorgegeben, etwa in der Form:

```
SPLINE
      SPL P1
      SPL P2
      SPL P10
      SPL P1
      ENDSPLINE
```

Nach einem Verfahren nach einer Ausführung der vorliegenden Erfindung, welches in Fig. 2 dargestellt ist, bzw. mittels eines Programmiermittels, das zum Durchführen dieses Verfahrens eingerichtet ist, kann ein Anwender zunächst in einem Schritt S20 einen Modifikationsbereich M vorgeben, im Ausführungsbeispiel exemplarisch durch Auswahl des Punktes P2 als Anfangspunkt BA und des Punktes P10 als Endpunkt BE.

Vorher, währenddessen oder danach kann der Anwender in einem Schritt S30 einen zu modifizierenden Bahnpunkt des Modifikationsbereichs als Referenzpunkt R auswählen, im Ausführungsbeispiel exemplarisch den Bahnpunkt P6 (R = P6).

Vorher, währenddessen oder danach kann der Anwender in einem Schritt S40 eine Modifikationsoperation $v_R$ für den Referenzpunkt auswählen und parametrieren, im Ausführungsbeispiel eine Verschiebung um einen vorgegebenen Betrag in eine vorgegebene Richtung. Gleichermaßen könnte der Anwender auch den modifizierten Bahnpunkt R' vorgeben, beispielsweise teachen, und so die Modifikationsoperation $v_R$ für den Referenzpunkt vorgeben.

Vorher, währenddessen oder danach kann der Anwender in einem Schritt S50 eine Modifikationsoperation $v_i$ für den Modifikationsbereich auswählen und parametrieren, im Ausführungsbeispiel eine Verschiebung um einen vorgegebenen Betrag in eine vorgegebene Richtung. Dabei kann der Betrag der Verschiebung und der Winkel beispielsweise von einem Abstand zwischen dem Bahnpunkt und dem Referenzpunkt abhängen, optional skaliert auf die Gesamtlänge des Modifikationsbereichs. Im Ausführungsbeispiel ist hierzu in Fig. 1 exemplarisch für den Punkt P7 die Strecke $s_{R7}$ zwischen dem (nicht modifizierten) Referenzpunkt R und dem Bahnpunkt P7 des Modifikationsbereichs eingezeichnet. Man erkennt an den exemplarisch dargestellten Verschiebungen der Bahnpunkte P3 und P9, dass der Winkel der Verschiebung, die senkrecht zu einem Tangenteneinheitsvektor $t$ an die Roboterbahn in einer Richtung erfolgt, die um einen Winkel $\alpha + 180°$ gegen einen Normaleneinheitsvektor n an die Roboterbahn gedreht ist, ebenso wie der Betrag der Verschiebung so mit dem Abstand zum Referenzpunkt R, normiert mit der Gesamtlänge des Modifikationsbereichs, variiert, dass Winkel $\alpha$ und Betrag am Anfang und Ende des Modifikationsbereichs verschwinden und bei dem Referenzpunkt R (betragsmäßig) ihr Maximum erreichen. Auf diese Weise bleibt die Roboterbahn [R10, R2] außerhalb des Modifikationsbereichs M unverändert.

Diese Modifikationsoperation $v_i = v_i(s_{Ri}, v_R)$ ist rein exemplarisch. Gleichermaßen kann eine Menge auswähl- und/oder parametrierbarer Modifikationsoperationen für den Modifikationsbereich eine Verschiebung aller Bahnpunkte des Modifikationsbereichs parallel zu der vorgegebenen Verschiebung des Referenzpunktes, gegebenenfalls skaliert mit dem Abstand zwischen Bahn- und Referenzpunkt, gegebenenfalls normiert mit der Gesamtlänge bzw. -strecke des Modifikationsbereichs umfassen. Zusätzlich oder alternativ zu einer Vorgabe einer Verschiebung in einer Richtung, die um einen vorgegebenen Winkel $\alpha$ gegen die Bahnnormale der Roboterbahn verdreht ist, kann eine Modifikationsoperationen für den Modifikationsbereich eine Verschiebung aller Bahnpunkte um eine vorgegebenen Betrag längs einer vorgegeben Kurve, insbesondere Gerade, im Arbeits- bzw. Koordinatenraum und/oder in einer Richtung senkrecht hierzu umfassen, die gegen die Richtung der Verschiebung des Referenzpunktes um einen vorgegebenen Winkel verdreht ist. Dies entspricht im Wesentlichen der in Fig. 1 dargestellten Modifikationsoperationen, wobei jedoch die Verschiebrichtung nicht mit Bezug auf die Roboterbahn, sondern die Kurve, insbesondere Gerade, im Arbeits- bzw.

Koordinatenraum a, b, c vorgegeben ist, der Winkel nicht in Bezug auf die Bahnnormale, sondern die Verschieberichtung des Referenzpunktes, und zusätzlich eine Verschiebung in Richtung dieser Kurve, insbesondere Geraden, vorgebbar, insbesondere parametrierbar ist.

Die Parametrierung kann beispielsweise dadurch erfolgen, dass der Anwender einen Parameter $\mu$ vorgibt, der den Verschiebungsbetrag $|v|$ oder den Drehwinkel $\alpha$ in Abhängigkeit von der Strecke $s_{Ri}$ zwischen dem jeweiligen Bahnpunkt $P_i$ (i=2,...10) und dem Referenzpunkt R, normiert mit der Länge bzw. Strecke $s_{2R}$ bzw. $s_{R10}$ des Teilmodifikationsbereichs, auf dem sich der Bahnpunkt P2,..., P10 befindet, beschreibt:

$$|v|, \alpha = \mu(\, s_{Ri}\, ,\, s_{2R},\, s_{R10}).$$

Vorzugsweise wird hierbei $\mu$ derart gestaltet, dass $\mu$ an P2 und P10 verschwindet, und an P6 = R den maximalen Betrag annimmt, wobei $\mu$ sich vorzugsweise umgekehrt wie die Strecke $s_{Ri}$ verhält.

Nachdem der Modifikationsbereich M mit den Bahnpunkten P2=BA,P3,...,P9, P10=BE und die Modifikation $v_R$ des Referenzpunktes R = P6 vorgegeben worden ist, wird in Schritt S50 durch das Programmiermittel automatisiert der Modifikationsbereich M, insbesondere dessen Bahnpunkte P2,...,P10 entsprechend der vorgegebenen, insbesondere ausgewählten und parametrierten, Modifikationsoperation $v_i = v_i(s_{Ri}, v_R)$ und somit auf Basis der vorgegebenen Modifikation modifiziert.

Man erkennt, dass auch wenig geschulte Anwender auf diese Weise einfach, fehlersicher und schnell ganze Bahnbereiche M der Roboterbahn B modifizieren können, indem sie nur einen Bahnpunkt R = P6 modifizieren. Vorteilhaft ergeben sich auch keine unerwünschten Rückwirkungen innerhalb oder außerhalb des Modifikationsbereichs.

Bezugszeichenliste

| | |
|---|---|
| B | Roboterbahn |
| M | Modifikationsbereich |
| P1,...,P10 | Bahnpunkt |
| R | Referenzpunkt |
| $v$ | Verschiebung (Veränderung, Modifikation(soperation)) |
| $s_{ij}$ | Strecke zwischen Bahnpunkten $i$, j |
| $t$ | Tangenteneinheitsvektor |
| $n$ | Normaleneinheitsvektor |

**Patentansprüche**

1. Verfahren zur Modifikation einer Roboterbahn (B), die mehrere Bahnpunkte (P1,...,P10) aufweist, mit den Schritten:

   (S20)  Vorgeben eines Modifikationsbereichs (M), der wenigstens zwei Bahnpunkte (P2,...,P10) der Roboterbahn aufweist;

   (S30, S40)  Vorgeben einer Modifikation ($v_R$) eines Referenzpunktes (R) des Modifikationsbereichs; und

   (S50)  automatisiertes Modifizieren des Modifikationsbereichs, insbesondere von Bahnpunkten des Modifikationsbereichs, auf Basis der vorgegebenen Modifikation ($v_i$),

   **dadurch gekennzeichnet, dass**
   wenigstens ein zur Vorgabe der Roboterbahn mehrfach verwendeter Bahnpunkt des Modifikationsbereichs (M) dupliziert wird und das Duplikat auf Basis der vorgegebenen Modifikation ($v_R$) automatisiert modifiziert wird.

2. Verfahren nach dem vorhergehenden Anspruch, **dadurch gekennzeichnet, dass** das Vorgeben einer Modifikation eines Referenzpunktes des Modifikationsbereichs die Auswahl eines zu modifizierenden Bahnpunktes (P6) des Modifikationsbereichs (S30), das Vorgeben eines modifizierten Bahnpunktes (R') und/oder die Auswahl und/oder Parametrierung einer Modifikationsoperation ($v_R$) für den Referenzpunkt (S40) und/oder ($v_i$) für den Modifikationsbereich (S50) umfasst.

3. Verfahren nach dem vorhergehenden Anspruch, **dadurch gekennzeichnet, dass** eine Menge auswähl- und/oder parametrierbarer Modifikationsoperationen ein, insbesondere paralleles und/oder skaliertes, Verändern ($v_3$) wenigstens eines Bahnpunktes (P3) des Modifikationsbereichs auf Basis eines Veränderns des Referenzpunktes umfasst.

4. Verfahren nach dem vorhergehenden Anspruch, **dadurch gekennzeichnet, dass** das skalierte Verändern eines Bahnpunktes (P7) des Modifikationsbereichs ein Verändern dieses Bahnpunktes auf Basis eines Abstandes ($s_{R7}$) zwischen diesem Bahn- und dem Referenzpunkt umfasst.

5. Verfahren nach einem der vorhergehenden Ansprüche, **dadurch gekennzeichnet, dass** eine Menge auswähl- und/oder parametrierbarer Modifikationsoperationen ein Glätten des Modifikationsbereichs umfasst.

6. Verfahren nach einem der vorhergehenden Ansprüche, **dadurch gekennzeichnet, dass** das Vorgeben eines Modifikationsbereichs das Vorgeben eines Bahnpunktes (BA=P2) der Roboterbahn und eines weiteren Bahnpunktes (BE=P10) und/oder einer Strecke der Roboterbahn umfasst.

7. Verfahren nach einem der vorhergehenden Ansprüche, **dadurch gekennzeichnet, dass** ein Bereich ([P10, P2]) der Roboterbahn, der an den Modifikationsbereich angrenzt, bei dem Modifizieren des Modifikationsbereichs unverändert bleibt.

8. Verfahren nach einem der vorhergehenden Ansprüche, **dadurch gekennzeichnet, dass** die Roboterbahn wenigstens abschnittsweise durch eine Spline-Funktion vorgegeben ist.

9. Verfahren nach einem der vorhergehenden Ansprüche, **dadurch gekennzeichnet, dass** das Vorgeben des Modifikationsbereichs und/oder der Modifikation und/oder das Modifizieren des Modifikationsbereichs interaktiv erfolgt.

10. Programmiermittel, das zum Durchführen eines Verfahrens nach einem der vorhergehenden Ansprüche eingerichtet ist.

## Claims

1. A method for the modification of a robot path (B) which comprises a plurality of path points (P1, ..., P10), comprising the steps of:

(S20)     specifying a modification region (M) which comprises at least two path points (P2, ..., P10) of the robot path;

(S30, S40)     specifying a modification ($v_R$) of a reference point (R) of the modification region; and

(S50)     automatically modifying the modification region, in particular automatically modifying path points of the modification region, on the basis of the specified modification ($v_i$),

**characterised in that**
at least one path point of the modification region (M), which path point is used a plurality of times in order to specify the robot path, is duplicated and the duplicate is modified automatically on the basis of the specified modification ($v_R$).

2. The method according to the preceding claim, **characterised in that** the specifying of a modification of a reference point of the modification region comprises the selection of a path point (P6) of the modification region (S30) to be modified, the specifying of a modified path point (R') and / or the selection and / or parameterisation of a modification operation ($v_R$) for the reference point (S40) and / or ($v_i$) for the modification region (S50).

3. The method according to the preceding claim, **characterised in that** a set of selectable and / or parameterisable modification operations comprises a modification ($v_3$) of at least one path point (P3) of the modification region on the basis of a modification of the reference point, in particular a parallel and / or scaled modification ($v_3$) of at least one path point (P3) of the modification region on the basis of a modification of the reference point.

4. The method according to the preceding claim, **characterised in that** the scaled modification of a path point (P7) of the modification region comprises a modification of said path point on the basis of a distance ($s_{R7}$) between said path point and the reference point.

5. The method according to any one of the preceding claims, **characterised in that** a set of selectable and / or parameterisable modification operations comprises smoothing the modification region.

6. The method according to any one of the preceding claims, **characterised in that** the specifying of a modification region comprises the specifying of a path point (BA = P2) of the robot path and of a further path point (BE = P10) and / or of a segment of the robot path.

7. The method according to any one of the preceding claims, **characterised in that** a region ([P10, P2]) of the robot path which is adjacent to the modification region remains unchanged during modification of the modification region.

8. The method according to any one of the preceding claims, **characterised in that** the robot path is specified, at least in sections, by a spline function.

9. The method according to any one of the preceding claims, **characterised in that** the specifying of the modification region and / or of the modification and / or the modification of the modification region takes place interactively.

10. A programming means which is arranged to carry out a method according to any one of the preceding claims.


## Revendications

1. Procédé de modification d'une trajectoire de robot (B), qui présente plusieurs points de trajectoire (P1, ..., P10), avec les étapes de :

    (S20) prédéfinition d'une plage de modification (M), des au moins deux points de trajectoire (P2, ..., P10) de la trajectoire de robot ;
    (S30, S40) prédéfinition d'une modification ($v_R$) d'un point de référence (R) de la plage de modification ; et
    (S50) modification automatisée de la plage de modification, en particulier de points de trajectoire de la plage de modification, sur la base de la modification prédéfinie ($v_i$),
    **caractérisé en ce que**
    au moins un point de trajectoire, utilisé plusieurs fois pour la prédéfinition de la trajectoire de robot, de la plage de modification (M) est dupliqué et le duplicata est modifié de façon automatisée sur la base de la modification ($v_R$) prédéfinie.

2. Procédé selon la revendication précédente, **caractérisé en ce que** la prédéfinition d'une modification d'un point de référence de la plage de modification comprend la sélection d'un point de trajectoire à modifier (P6) de la plage de modification (S30), la prédéfinition d'un point de trajectoire modifié (R') et/ou la sélection et/ou le paramétrage d'une opération de modification ($v_R$) pour le point de référence (S40) et/ou ($v_i$) pour la plage de modification (S50).

3. Procédé selon la revendication précédente, **caractérisé en ce qu'**une quantité d'opérations de modification sélectionnables et/ou paramétrables comprend un changement ($v_3$), en particulier parallèle et/ou mis à l'échelle, d'au moins un point de trajectoire (P3) de la plage de modification sur la base d'un changement du point de référence.

4. Procédé selon la revendication précédente, **caractérisé en ce que** le changement mis à l'échelle d'un point de trajectoire (P7) de la plage de modification comprend un changement de ce point de trajectoire sur la base d'une distance ($s_{R7}$) entre ce point de trajectoire et le point de référence.

5. Procédé selon l'une quelconque des revendications précédentes, **caractérisé en ce qu'**une quantité d'opérations de modification sélectionnables et/ou paramétrables comprend un lissage de la plage de modification.

6. Procédé selon l'une quelconque des revendications précédentes, **caractérisé en ce que** la prédéfinition d'une plage de modification comprend la prédéfinition d'un point de trajectoire (BA = P2) de la trajectoire de robot et d'un autre point de trajectoire (BE = P10) et/ou d'un parcours de la trajectoire de robot.

7. Procédé selon l'une quelconque des revendications précédentes, **caractérisé en ce qu'**une plage ([P10, P2]) de la trajectoire de robot, qui est contigüe à la plage de modification, reste inchangée lors de la modification de la plage de modification.

**8.** Procédé selon l'une quelconque des revendications précédentes, **caractérisé en ce que** la trajectoire de robot est prédéfinie au moins par section par une fonction spline.

**9.** Procédé selon l'une quelconque des revendications précédentes, **caractérisé en ce que** la prédéfinition de la plage de modification et/ou de la modification et/ou la modification de la plage de modification a lieu de manière interactive.

**10.** Moyen de programmation, qui est aménagé pour la réalisation d'un procédé selon l'une quelconque des revendications précédentes.

# Fig. 1

# Fig. 2

EP 2 879 842 B1

**IN DER BESCHREIBUNG AUFGEFÜHRTE DOKUMENTE**

**In der Beschreibung aufgeführte Patentdokumente**

- EP 1531028 A2